# EUROPÄISCHE PATENTSCHRIFT

(11) **EP 2 567 617 B1**
(45) Veröffentlichungstag und Bekanntmachung des Hinweises auf die Patenterteilung: **01.04.2020**
(21) Anmeldenummer: 12401175.0
(22) Anmeldetag: 23.08.2012
(51) Int. Cl.: A01M 7/00

(54) **Landwirtschaftliche Feldspritze mit Mehrfachdüsenkörpern**
Agricultural field spraying device with multi nozzle heads
Pulvérisateur agricole avec tête de pulvérisation multi buses

(30) Priorität: 09.09.2011 DE 102011053420
(43) Veröffentlichungstag der Anmeldung: 13.03.2013
(73) Patentinhaber: Amazonen-Werke H. Dreyer GmbH & Co. KG, 49205 Hasbergen (DE)
(72) Erfinder: Austermann, Stefan, 48291 Telgte (DE); Haselroth, Hanno, 49545 Tecklenburg (DE); Kiefer, Stefan, 49074 Osnabrück (DE); Mindrup, Tobias, 49080 Osnabrück (DE)

(56) Entgegenhaltungen:
- EP-B1- 1 254 723
- WO-A1-2009/118591
- DE-A1-102006 012 504
- DE-A1-102006 038 688
- US-A- 5 704 546

## Beschreibung

Die Erfindung betrifft eine landwirtschaftliche Feldspritze und ein Verfahren zum Einsatz einer landwirtschaftlichen Feldspritze gemäß der Oberbegriffe des Patentansprüche 1 und 3.

Eine derartige landwirtschaftliche Feldspritze und ein derartiges Verfahren zum Einsatz einer landwirtschaftlichen Feldspritze sind durch die EP 1 254 723 B1 bekannt. Diese Feldspritze weist ein Verteilergestänge auf, an dem eine Flüssigkeitszufuhrleitung angeordnet ist. An dieser Flüssigkeitszufuhrleitung sind in Abständen Anschlussstutzen für Spritzdüsen angeordnet. An jedem Anschlussstutzen sind so genannte Mehrfachdüsenköpfe mit verschiedenartigen Spritzdüsen zur Erzeugung unterschiedlicher Ausbringmenge und Tropfengrößespektren angeordnet. So können auch Spritzdüsen unterschiedlicher Abdriftklassen an dem Mehrfachdüsenkopf montiert werden. Den Mehrfachdüsenköpfen sind für jede an einer Abgangsleitung des Mehrfachdüsenkopfes anzuordnende fernbedienbare Schaltelemente zugeordnet, mit denen die Flüssigkeitszufuhr über eine Steuerungseinrichtung zu den Einzelspritzdüsen zu- und/oder abgeschaltet werden kann. Hierbei erfolgt die Zu- oder Abschaltung der einzelnen Spritzdüsen derart, dass immer Spritzdüsen gleicher Art und Abdriftklasse über die gesamte Arbeitsbreiten des Verteilergestänges zum Einsatz kommen.

Durch die DE 44 441 472 A1 ist eine weitere Feldspritze bekannt, welche ebenfalls ein Verteilergestänge aufweist dem eine Flüssigkeitsleitung mit Spritzdüsen aufweist. Wenn an der Feldrandgrenze das Feld mit Pflanzenschutzmitteln besprüht werden soll, ist hier vorgesehen, dass die der Feldrandgrenze benachbarten Düse die Flüssigkeit mit einem asymmetrischen Spritzkegel mit steil zur Feldrandgrenze abfallender Begrenzung ausstößt oder dass der äußeren Spritzdüse ein in den Spritzkegel hineinragendes Leitblech zur Erzeugung einer steil abfallenden Spritzverteilung im Grenzbereich zugeordnet ist. Weiterhin soll hier auch bei der Spritzdüse, die der Feldrandgrenze benachbart ist, annähernd das gleiche Tropfenspektrum erhalten bleiben, welches auch von den übrigen Spritzdüsen des Verteilergestänges erzeugt wird.

Die US 5 704 546 A beschreibt ein Steuerungssystem für eine Feldspritze mit pulsmodulierten Düseneinheiten umfassend jeweils eine Spritzdüse und einen über eine Busleitung von einer Steuereinheit zentral gesteuerten Elektromagneten zum taktweisen Öffnen der Spritzdüse in einem veränderbaren Taktverhältnis. Für mehrere Düseneinheiten gemeinsam oder für einzelne Düseneinheiten sind ferne zentral gesteuerte Drosselventile zum Einstellen des Betriebsdrucks der Spritzdüsen vorhanden. Mit dem Betriebsdruck lässt sich das Tropfengrößenspektrum der Spritzdüsen einstellen. Die Durchflussrate wird passend zu einem in der Feldspritze verwendeten Spritzdüsentyp durch Variation des Taktverhältnisses eingestellt. Die Steuerung basiert auf einer Anpassung sowohl des Betriebsdrucks als auch des Taktverhältnisses. Tropfengrößenspektrum und Durchflussrate können auf diese Weise für einzelne Teilbereiche der Arbeitsbreite auch separat eingestellt werden.

Die EP 1 254 723 B1 offenbart eine landwirtschaftliche Feldspritze zum Ausbringen von Flüssigkeiten mit einem Verteilergestänge mit zumindest einer quer zur Fahrtrichtung verlaufenden Flüssigkeitszufuhrleitung, die in Abständen mit Anschlussstutzen zum Anschluss von Mehrfachdüsenkörpern mit daran angeschlossenen, gegebenenfalls auch verschiedenartigen Spritzdüsen versehen ist. In den Gehäusen der Mehrfachdüsenkörper ist jeweils eine Ventilanordnung mit über eine pneumatische Steuerleitung fernbedienbaren Schaltelementen angeordnet, um über die Ventilanordnung die Flüssigkeitszufuhr zu den jeweiligen Spritzdüsen zuzuschalten oder abzuschalten.

Für das Besprühen von Pflanzenkulturen im Grenzbereich werden behördliche Auflagen erlassen, nach denen ein entsprechender Abstand von der Feldrandgrenze, insbesondere von Oberflächengewässern einzuhalten ist. Dieser Abstand kann jedoch bei dem Einsatz von verlustmindernder Applikationstechnik reduziert werden, d. h., dass beim Besprühen von Feldrandgrenzen Spritzdüsen an dem Verteilergestänge zum Einsatz kommen, die ein grobtropfiges Tropfenspektrum erzeugen. In der Praxis kommen derartige zur Abdriftminderung geeignete Spritzdüsen zum Einsatz, obwohl entsprechend der behördlichen Vorschrift nur ein wesentlich kleinerer Randbereich mittels der abdriftmindernden Spritzdüsen besprüht werden müsste.

Der Erfindung liegt die Aufgabe zu Grunde, die Voraussetzung dafür zu schaffen, dass angepasst an die behördlichen Vorschriften nicht wesentlich breitere als nötig Randstreifen im Grenzbereich mittels abdriftmindernden Spritzdüsen besprüht werden.

Diese Aufgabe wird mit einer Feldspritze gemäß Anspruch 1 gelöst, wobei die Steuerungsvorrichtung eine Schaltungsanordnung für die Schaltelemente zur Zu- und Abschaltung der Flüssigkeitszufuhr zu den Spritzdüsen in der Weise aufweist, wobei in verschiedenen Teilbereichen des Verteilergestänges unterschiedliche Spritzdüsen zugeschaltet sind, und wobei mehrere an zumindest einem der beiden äußersten Teilbereiche des Verteilergestänges angeordnete Spritzdüsen nur Spritzdüsen zur Erzeugung eines abdriftärmeren Tropfenspektrums als im übrigen Bereich des Verteilergestänges zugeschaltet sind.

Infolge dieser Maßnahmen lassen sich in Teilbereichen des Verteilergestänges verschiedenartige Spritzdüsen aktivieren, so dass entsprechend den behördlichen Vorschriften an dem Verteilergestänge beim Einsatz an der Feldrandgrenze in dem der Grenze zugewandten Bereich in einem Teilbereich Spritzdüsen, die ein grobtropfiges Tropfenspektrum zur Abdriftminderung erzeugen, aktiviert werden, während in dem übrigen Bereich des Verteilergestänges, welches der Feldrandgrenze abgewandt ist, Spritzdüsen, die ein für diesen Einsatzzweck erforderliches Tropfenspektrum erzeugen, aktiviert werden.

Um die behördlichen Auflagen beim Besprühen von Feldrandstreifen erfüllen zu können, ist vorgesehen, dass der äußerste Teilbereich, in dem nur die Spritzdüsen zur Erzeugung eines abdriftärmeren Tropfenspektrums als im übrigen Bereich des Verteilergestänges aktiviert sind, zumindest eine Breite von 5 m, vorzugsweise 10 m aufweist. Hierbei kann, erforderlichenfalls der Abstand abschnittsweise vergrößert werden.

Zur Durchführung des erfindungsgemäßen Verfahrens zum Einsatz einer landwirtschaftlichen Feldspritze beim Besprühen von Feldrandgrenzen ist gemäß Anspruch 3 unter anderem vorgesehen, dass die Steuerungsvorrichtung eine Schaltungsanordnung für die Schaltelemente zur Zu- und Abschaltung der Flüssigkeitszufuhr zu den Spritzdüsen zum Besprühen von landwirtschaftlichen Flächen in deren Randbereich in der Weise aufweist, dass in verschiedenen Teilbereichen des Verteilergestänges unterschiedliche Spritzdüsen zuschaltbar sind, dass mehrere an zumindest einem der beiden äußerten Teilbereiche des Verteilergestänges angeordnete Spritzdüsen nur Spritzdüsen zur Erzeugung eines abdriftärmeren Tropfenspektrums als im übrigen Bereich des Verteilergestänges zugeschaltet sind, wenn mit der Feldspritze im Randbereich der landwirtschaftlichen Fläche die Flüssigkeit ausgebracht wird. Hierdurch ergeben sich die vorgeschilderten Vorteile.

Weitere Einzelheiten der Erfindung sind der Beispielsbeschreibung und den Zeichnungen zu entnehmen. Hierbei zeigen
- Fig. 1: eine landwirtschaftliche Feldspritze mit Verteilergestänge in perspektivischer Darstellung mit der Verteilung von erzeugbaren Tropfengrößenspektren durch die an dem Verteilergestänge angeordneten Spritzdüsen in schematischer Darstellung,
- Fig. 2: ein Mehrfachdüsenkopf mit Spritzdüsen, wobei die ein grobtropfiges Tropfenspektrum erzeugbare Spritzdüse aktiviert ist, in perspektivischer und schematischer Darstellung,
- Fig. 3: ein Mehrfachdüsenkopf mit Spritzdüsen, wobei die ein feintropfiges Tropfenspektrum erzeugbare Spritzdüse aktiviert ist, in perspektivischer und schematischer Darstellung und
- Fig. 4: einen Ausschnitt einer behandelten Ackerfläche in schematischer Darstellung.

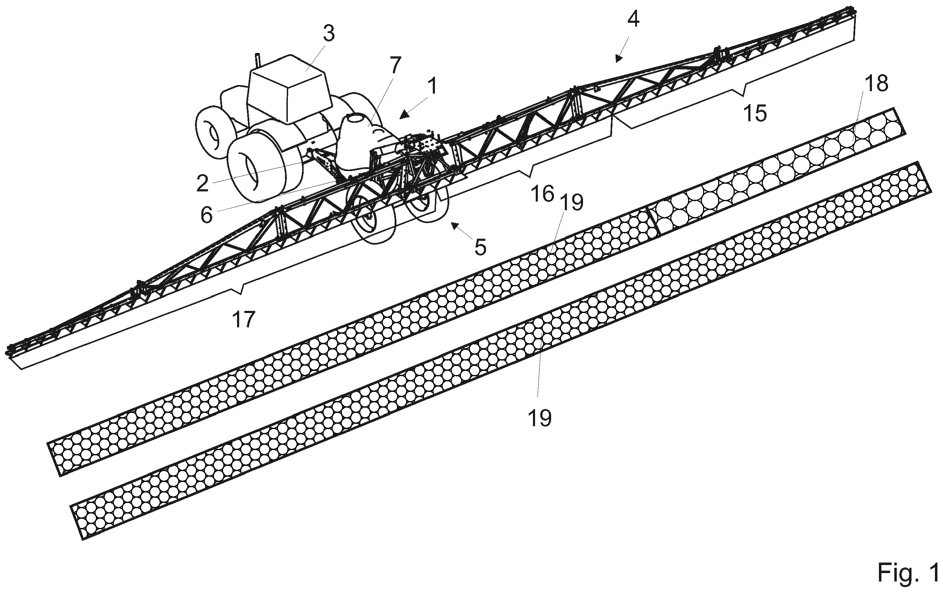

Die gezogene landwirtschaftliche Feldspritze 1 ist über die Deichsel 2 an den Ackerschlepper 3 angekoppelt. Die Feldspritze weist er das Verteilergestänge 4, das Fahrwerk 5, den auf dem Rahmen 6 angeordneten Vorratsbehälter 7 auf. An dem Verteilergestänge 7 sind in gleichmäßigen Abständen an der am Verteilergestänge 7 angeordneten Flüssigkeitszuleitung die Anschlussstutzen 8 zum Anschluss von Mehrfachdüsenkörpern 9 mit mehreren verschiedenartigen Spritzdüsen 10, 11, 12 angeordnet. In den Gehäusen 13 der Mehrfachdüsenkörper 9 ist jeweils eine Ventilanordnung mit fernbedienbaren Schaltelementen, die über die Anschlüsse 14 und daran angeschlossenen Datenleitungen mit einem Bordcomputer verbunden sind, angeordnet. Über diese Ventilanordnung kann die Flüssigkeitszufuhr zu den jeweiligen Spritzdüsen 10, 11, 12 zugeschaltet oder abgeschaltet werden. Die fernbedienbaren Abschaltelemente der Ventilanordnung werden über eine Steuerungseinrichtung, die als Bordcomputer ausgebildet ist, angesteuert. Somit können über die Steuerungseinrichtung die Schaltelemente zur Zu- und Abschaltung der Flüssigkeitszufuhr zu den Spritzdüsen 10, 11, 12 in der Weise angesteuert und betätigt werden, dass im verschiedenen Teilbereichen 15, 16, 17, die den Teilbreiten entsprechen können, des Verteilergestänges 4 unterschiedliche Spritzdüsen 10, 11, 12 zugeschaltet sind, und zwar derart, dass mehrere an einem der beiden äußerten Teilbreiten 15 des Verteilergestänges 4 angeordnete Spritzdüsen 10, 11, 12 nur Spritzdüsen 10 zur Erzeugung eines abdriftärmeren Tropfenspektrums, nämlich eines grobtropfigen Tropfenspektrums 18, in dem die ein feintropfiges Tropfenspektrums erzeugende Spritzdüsen 11 zugeschaltete sind,als im übrigen Bereich des Verteilergestänges 4 zuschaltbar sind, wie die Fig. 1 zeigt.

Es jedoch auch möglich, wie die Fig. 1 ebenfalls zeigt, dass über die gesamte Breite des Verteilergestänges 4 gleichartige Spritzdüsen 11 zur Erzeugung eines feintropfigen Tropfenspektrums 19 zugeschaltet sind.

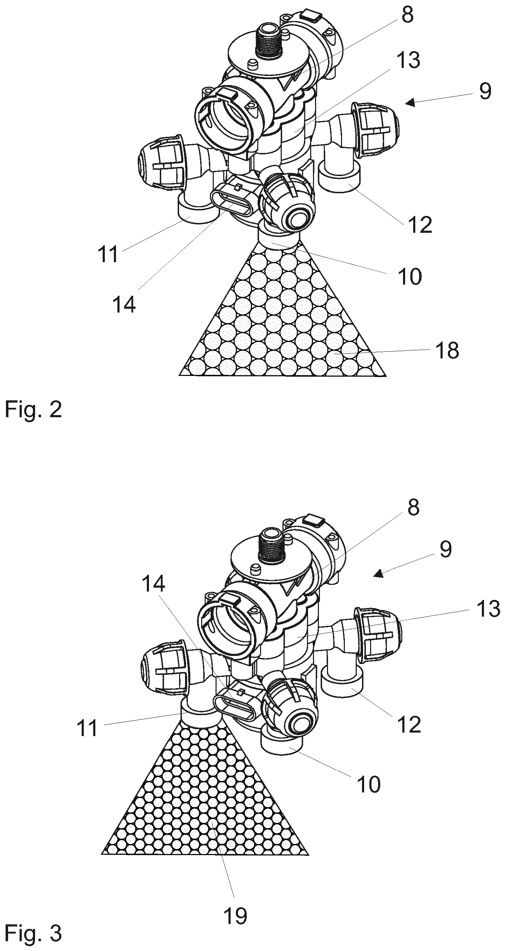

Die Umschaltung von Spritzdüsen 11, die ein feintropfiges Tropfenspektrum 19 gemäß Fig. 3 erzeugen auf Spritzdüsen 10, die ein grobtropfiges Tropfenspektrums 18 gemäß Fig. Erzeugen, erfolgt über die von Schaltelementen zu betätigende Ventileinrichtung des jeweiligen Mehrfachdüsenkörpers 9.

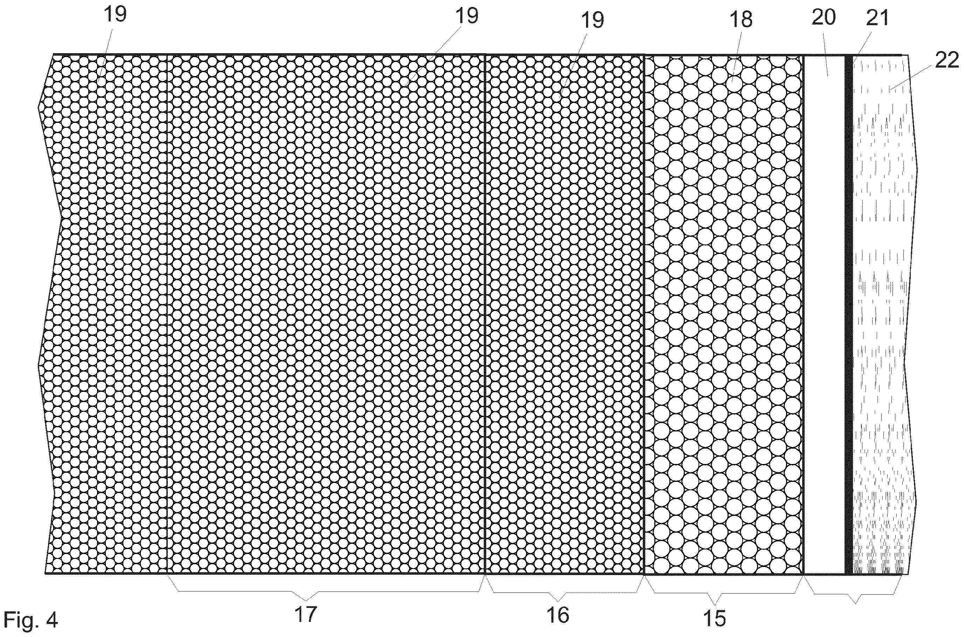

Hierbei ist die als Bordcomputer ausgebildete Steuerungseinrichtung derart ausgelegt, dass der äußerste Teilbereich 15, in dem nur die Spritzdüsen 10 zur Erzeugung eines abdriftärmeren Tropfenspektrums 18 als im übrigen Bereich des Verteilergestänges 4 zugeschaltet sind, zumindest eine Breite von 5 m, vorzugsweise 10 m aufweist, wie in Fig. 1 und 4 dargestellt ist. Hierbei kann entsprechend der Auslegung der Steuerungseinrichtung und der Ansteuerung der Ventilanordnung der Mehrfachdüsenkörper 9 die Anzahl der ein grobtropfiges Tropfenspektrum 18 erzeugenden Spritzdüsen 10 und somit die Breite dieses grobtropfiges Spritzstreifens entsprechend dem auszubringenden Mitteln gemäß den behördlichen Vorschriften variiert und angepasst werden. Hierbei kann der Streifen 20 des Feldes, der nicht behandelt werden darf, zwischen Feldrandgrenze 21 und den Streifen, auf dem die auszubringenden Mittel mit dem grobtropfigen Tropfenspektrum 18 ausgebracht werden, in einer Breite beispielsweise zwischen 0 und 10 m variieren. Somit werden Gräben 22, Wege oder angrenzende Felder, die an der Feldgrenze 21 des zu behandelnden Feldes angrenzen nicht behandelt bzw. in diesen Bereichen keine Spritzmittel ausgebracht.

Somit weist die Steuerungsvorrichtung eine Schaltungsanordnung für die Schaltelemente der Ventilanordnung zur Zu- und Abschaltung der Flüssigkeitszufuhr zu den Spritzdüsen 10, 11, 12 zum Besprühen von landwirtschaftlichen Flächen in deren Randbereich in der Weise auf, dass in verschiedenen Teilbereichen 15, 16, 17 des Verteilergestänges 4 unterschiedliche Spritzdüsen 10, 11, 12 zuschaltbar sind, und zwar derart, dass mehrere an zumindest einem der beiden äußerten Teilbereiche 15 des Verteilergestänges 4 angeordnete Spritzdüsen 10 zur Erzeugung eines abdriftärmeren Tropfenspektrums 18 als im übrigen Bereich des Verteilergestänges 4 zugeschaltet sind, wenn mit der Feldspritze im Randbereich der landwirtschaftlichen Fläche die Flüssigkeit ausgebracht wird, wie in Fig. 1 und 4 dargestellt ist.

Ein abdriftärmeres Tropfenspektrums 18 zeichnet dadurch aus, dass die Flüssigkeitstropfen in dem Sprühfächer relativ grobtropfig sind.

## Patentansprüche

1. Landwirtschaftliche Feldspritze (1) zum Ausbringen von Flüssigkeiten mit einem Verteilergestänge (4) mit zumindest einer quer zur Fahrtrichtung verlaufenden Flüssigkeitszufuhrleitung, die in Abständen mit Anschlussstutzen (8) und daran angeschlossenen Mehrfachdüsenkörpern (9) mit daran angeschlossenen, verschiedenartigen Spritzdüsen (10, 11, 12) versehen ist, wobei in den Gehäusen (13) der Mehrfachdüsenkörper (9) jeweils eine Ventilanordnung mit fernbedienbaren Schaltelementen angeordnet ist, die über Anschlüsse (14) und daran angeschlossenen Datenleitungen mit einem Bordcomputer verbunden sind, um über diese Ventilanordnung die Flüssigkeitszufuhr zu den jeweiligen Spritzdüsen (10, 11, 12) zuzuschalten oder abzuschalten, und wobei der Bordcomputer eine Schaltungsanordnung für die Schaltelemente zur Zu- und Abschaltung der Flüssigkeitszufuhr zu den Spritzdüsen (10, 11, 12) in der Weise aufweist, dass in verschiedenen Teilbereichen (15, 16, 17) des Verteilergestänges (4) unterschiedliche Spritzdüsen (10, 11, 12) zugeschaltet sind, und zwar derart, dass von mehreren an zumindest einem der beiden äußersten Teilbereiche (15) des Verteilergestänges (4) angeordneten Spritzdüsen (11, 11, 12) nur Spritzdüsen (10) zur Erzeugung eines abdriftärmeren Tropfenspektrums (18) als im übrigen Bereich (16, 17) des Verteilergestänges (4) zugeschaltet sind.

2. Landwirtschaftliche Feldspritze nach Anspruch 1, **dadurch gekennzeichnet, dass** der äußerste Teilbereich (15), in dem nur die Spritzdüsen (10) zur Erzeugung eines abdriftärmeren Tropfenspektrums (18) als im übrigen Bereich des Verteilergestänges (4) zugeschaltet sind, zumindest eine Breite von 5 m, vorzugsweise 10 m aufweist.

3. Verfahren zum Einsatz einer landwirtschaftlichen Feldspritze (1) zum Ausbringen von Flüssigkeiten zum Besprühen von landwirtschaftlichen Flächen in deren Randbereich mit einem Verteilergestänge (4) mit zumindest einer quer zur Fahrtrichtung verlaufenden Flüssigkeitszufuhrleitung, die in Abständen mit Anschlussstutzen (8) und daran angeschlossenen Mehrfachdüsenkörpern (9) mit daran angeschlossenen, verschiedenartigen Spritzdüsen (10, 11, 12) versehen ist, wobei in den Gehäusen (13) der Mehrfachdüsenkörper (9) jeweils eine Ventilanordnung mit fernbedienbaren Schaltelementen angeordnet ist, die über Anschlüsse (14) und daran angeschlossenen Datenleitungen mit einem Bordcomputer verbunden sind, und die Flüssigkeitszufuhr zu den jeweiligen Spritzdüsen (10, 11, 12) über diese Ventilanordnung zugeschaltet oder abgeschaltet wird, und wobei der Bordcomputer eine Schaltungsanordnung für die Schaltelemente zur Zu- und Abschaltung der Flüssigkeitszufuhr zu den Spritzdüsen (10, 11, 12) zum Besprühen von landwirtschaftlichen Flächen in deren Randbereich aufweist, und in verschiedenen Teilbereichen (15, 16, 17) des Verteilergestänges (4) unterschiedliche Spritzdüsen (10, 11, 12) zugeschaltet werden, und zwar derart, dass von mehreren an zumindest einem der beiden äußersten Teilbereiche (15) des Verteilergestänges (4) angeordnete Spritzdüsen (10, 11, 12) nur Spritzdüsen (10) zur Erzeugung eines abdriftärmeren Tropfenspektrums (18) als im übrigen Bereich (16, 17) des Verteilergestänges (4) zugeschaltet sind, wenn mit der Feldspritze (1) im Randbereich der landwirtschaftlichen Fläche die Flüssigkeit ausgebracht wird.

## Claims

1. Agricultural field spraying device (1) for dispensing liquids with a distribution boom (4) having at least one liquid supply line which runs transversely with respect to the direction of travel and is provided at intervals with connection branches (8) and multi-nozzle bodies (9) which are connected to the latter and have various spray nozzles (10, 11, 12) connected thereto, wherein the housings (13) of the multi-nozzle bodies (9) each contain a valve arrangement with remote-controllable switching elements which are connected to an on-board computer via connections (14) and data lines connected to the latter, in order to switch on or to switch off the liquid supply to the respective spray nozzles (10, 11, 12) via said valve arrangement, and wherein the on-board computer has a circuit arrangement for the switching elements for switching on and off the liquid supply to the spray nozzles (10, 11, 12) in such a manner that different spray nozzles (10, 11, 12) are switched on in different partial regions (15, 16, 17) of the distribution boom (4), specifically in such a manner that, of a plurality of spray nozzles (11, 11, 12) arranged on at least one of the two outermost partial regions (15) of the distribution boom (4), only spray nozzles (10) for producing a droplet spectrum (18) with less drift than in the remaining region (16, 17) of the distribution boom (4) are switched on.

2. Agricultural field spraying device according to Claim 1, **characterized in that** the outermost partial region (15), in which only the spray nozzles (10) for producing a droplet spectrum (18) with less drift than in the remaining region of the distribution boom (4) are switched on, has at least a width of 5 m, preferably 10 m.

3. Method for using an agricultural field spraying device (1) for dispensing liquids for spraying agricultural areas in the edge region thereof with a distribution boom (4) having at least one liquid supply line which runs transversely with respect to the direction of travel and is provided at intervals with connection branches (8) and multi-nozzle bodies (9) which are connected to the latter and have various spray nozzles (10, 11, 12) connected thereto, wherein the housings (13) of the multi-nozzle bodies (9) each contain a valve arrangement with remote-controllable switching elements which are connected to an on-board computer via connections (14) and data lines connected to the latter, and the liquid supply to the respective spray nozzles (10, 11, 12) is switched on or switched off via said valve arrangement, and wherein the on-board computer has a circuit arrangement for the switching elements for switching on and off the liquid supply to the spray nozzles (10, 11, 12) for spraying agricultural areas in the edge region thereof and different spray nozzles (10, 11, 12) are switched on in different partial regions (15, 16, 17) of the distribution boom (4), specifically in such a manner that, of a plurality of spray nozzles (10, 11, 12) arranged on at least one of the two outermost partial regions (15) of the distribution boom (4), only spray nozzles (10) for producing a droplet spectrum (18) with less drift than in the remaining region (16, 17) of the distribution boom (4) are switched on, when the liquid is discharged with the field spraying device (1) in the edge region of the agricultural area.

## Revendications

1. Pulvérisateur agricole (1) pour épandre des liquides avec une barre distributrice (4) comprenant au moins une conduite d'alimentation en liquide s'étendant transversalement à la direction de conduite, qui est pourvue à intervalles de tubulures de raccordement (8) et de corps de buses multiples (9) raccordés à celles-ci avec des buses de pulvérisation de types différents (10, 11, 12) raccordées à ceux-ci, un agencement de soupapes avec des éléments de commutation à commande à distance étant disposé à chaque fois dans les boîtiers (13) des corps de buses multiples (9), lesquels sont connectés par le biais de raccords (14) et de lignes de données raccordées à ceux-ci à un ordinateur de bord, afin d'ouvrir ou de fermer, par le biais de cet agencement de soupapes, l'alimentation en liquide aux buses de pulvérisation respectives (10, 11, 12), et l'ordinateur de bord présentant un agencement de commutation pour les éléments de commutation pour ouvrir et fermer l'alimentation en liquide aux buses de pulvérisation (10, 11, 12) de telle sorte que différentes buses de pulvérisation (10, 11, 12) soient ouvertes dans différentes régions partielles (15, 16, 17) de la barre distributrice (4), et ce de telle sorte que parmi plusieurs buses de pulvérisation (11, 11, 12) disposées au moins au niveau de l'une des deux régions partielles les plus extérieures (15) de la barre de distribution (4), seules les buses de pulvérisation (10) prévues pour générer un spectre de gouttes (18) à plus faible dérive que dans la région restante (16, 17) de la barre de distribution (4) soient ouvertes.

2. Pulvérisateur agricole selon la revendication 1, **caractérisé en ce que** la région partielle la plus extérieure (15), dans laquelle seulement les buses de pulvérisation (10) prévues pour générer un spectre de gouttes (18) à plus faible dérive que dans la région restante de la barre de distribution (4) sont ouvertes, présente au moins une largeur de 5 m, de préférence de 10 m.

3. Procédé d'utilisation d'un pulvérisateur agricole (1) pour épandre des liquides pour pulvériser des surfaces agricoles dans leur région de bord avec une barre de distribution (4) comprenant au moins une conduite d'alimentation en liquide s'étendant transversalement à la direction de conduite, qui est pourvue à intervalles de tubulures de raccordement (8) et de corps de buses multiples (9) raccordés à celles-ci avec des buses de pulvérisation de types différents (10, 11, 12) raccordées à ceux-ci, un agencement de soupapes avec des éléments de commutation à commande à distance étant disposé à chaque fois dans les boîtiers (13) des corps de buses multiples (9), lesquels sont connectés par le biais de raccords (14) et de lignes de données raccordées à ceux-ci à un ordinateur de bord et, par le biais de cet agencement de soupapes, l'alimentation en liquide aux buses de pulvérisation respectives (10, 11, 12) étant ouverte ou fermée, et l'ordinateur de bord présentant un agencement de commutation pour les éléments de commutation pour ouvrir et fermer l'alimentation en liquide aux buses de pulvérisation (10, 11, 12) pour pulvériser des surfaces agricoles dans leur région de bord, et différentes buses de pulvérisation (10, 11, 12) étant ouvertes dans différentes régions partielles (15, 16, 17) de la barre distributrice (4), et ce de telle sorte que parmi plusieurs buses de pulvérisation (10, 11, 12) disposées au moins au niveau de l'une des deux régions partielles les plus extérieures (15) de la barre de distribution (4), seules les buses de pulvérisation (10) prévues pour générer un spectre de gouttes (18) à plus faible dérive que dans la région restante (16, 17) de la barre de distribution (4) soient ouvertes, lorsque que le liquide est épandu avec le pulvérisateur (1) dans la région de bord de la surface agricole.
